# FASCICULE DE BREVET EUROPEEN

(11) **EP 4 217 617 B1**
(45) Date de publication et mention de la délivrance du brevet: **11.03.2026**
(21) Numéro de dépôt: 21790956.3
(22) Date de dépôt: 22.09.2021
(51) Int. Cl.: F16C 7/02, B64D 27/40

(54) **BIELLE CREUSE**
HOHLE PLEUELSTANGE
HOLLOW CONNECTING ROD

(30) Priorité: 23.09.2020 FR 2009642
(43) Date de publication de la demande: 02.08.2023
(73) Titulaire: SAFRAN AIRCRAFT ENGINES, 75015 Paris (FR)
(72) Inventeur: METGE, Pierre Jean-Baptiste, 77550 MOISSY CRAMAYEL (FR); DE TINGUY, Tiphaine, 77550 MOISSY CRAMAYEL (FR)
(74) Mandataire: Cabinet Camus Lebkiri
(86) Numéro de dépôt international: PCT/FR2021/051623
(87) Numéro de publication internationale: WO 2022/064138

(56) Documents cités:
- EP-A1- 1 864 027
- EP-A1- 2 643 600
- DE-A1- 10 324 981
- DE-A1- 102015 118 890
- DE-A1- 2 300 670
- FR-A1- 2 755 044
- FR-A1- 3 035 605
- US-A1- 2015 267 739

## Description

### DOMAINE TECHNIQUE DE L'INVENTION

Le domaine technique de l'invention est celui des bielles bi-rotulée et plus particulièrement celles utilisées dans les moteurs aéronautiques ou tout autre produit contenant des bielles et ayant besoin de maitriser la masse.

### ARRIERE-PLAN TECHNOLOGIQUE DE L'INVENTION

Aujourd'hui ces bielles sont métalliques ou composites pleines (de section ronde ou non, constante ou non).

Ces bielles sont disponibles et peu couteuses, elles résistent à des températures assez élevées (>300°C), sont généralement métalliques (acier, inox) et de géométrie simples (barre ronde à section constante pleine) mais sont relativement lourdes surtout lorsque les dimensions entre les deux interfaces s'éloignent. En effet, comme l'indique la formule d'Euler, à iso-résistance (flambement/compression, traction), la masse des bielles rondes pleine croit selon le cube de la distance séparant les points de fixation.

Or, quand les points de fixation s'éloignent de plus en plus, passant par exemple de 331mm à 440mm, un des objectifs était donc de trouver un concept de bielle à la fois fabricable à moindre coût et plus légère pour limiter la prise de masse du moteur ou du produit contenant cette bielle.

Pour répondre à ces problématique, il existe des bielles tubulaires métalliques ou composites telles que décrites dans les brevets EP 2 643 600 et EP 1 864 027. Le document DE 103 24 981 A1 divulgue les caractéristiques du préambule de la revendication 1.

Cependant, le poids de la bielle reste encore important et il n'est pas possible de réduire les parois sans dégrader les performances de ces bielles.

### RESUME DE L'INVENTION

L'invention offre une solution aux problèmes évoqués précédemment, en réduisant la quantité de matière, ce qui permet d'alléger la bielle, tout en augmentant son inertie, d'où un renforcement au flambage, surtout en zone centrale.

La bielle selon l'invention comprend un corps creux avec une bague à chaque extrémité et un centre, une paroi d'épaisseur e, la paroi définissant un périmètre extérieur pₑ et un périmètre intérieur pi, une section de surface s étant comprise entre les périmètres extérieur et intérieur, elle est caractérisée en ce que le périmètre extérieur pₑ augmente des extrémités du corps creux vers le centre de la bielle, le corps creux gardant une section de surface s constante, l'épaisseur e diminuant de l'extrémité vers le centre de la bielle.

La géométrie de la nouvelle bielle se creuse et adopte un périmètre croissant des bords vers le centre. L'épaisseur de paroi est elle aussi ajustée de manière à égaliser les sections travaillantes tout au long du corps creux, ainsi l'épaisseur minimale se situe au centre de la bielle. La section restant constante permet de garder une certaine rigidité à la bielle. On obtient ainsi une baisse de la masse, une augmentation de la résistance au flambement et une augmentation des fréquences des premiers modes vibratoires. Ce profil apporte à la fois des gains significatifs en masse (environ -40%) et une résistance deux fois plus importante. Le gain en résistance est tel que le gain masse peut être encore accentué soit en réduisant l'épaisseur de paroi, soit en passant à un matériau plus léger et/ou moins raide.

Selon une première variante, le corps creux est cylindrique de révolution, ce qui permet à la fois symétrie et équilibre de la bielle.

Selon une deuxième variante, le corps creux est ovale ou rectangulaire. On peut ainsi réduire l'encombrement dans une direction donnée, par exemple si la bielle transverse un écoulement de gaz ou liquide.

Il est aussi possible de dévier la « trajectoire », ou déformer la ligne ou axe de bielle, pour éviter une zone (chaude) ou objet plus facilement qu'en version pleine car le profil creux possède une meilleure inertie et une meilleure raideur à masse égale.

Avantageusement, un anneau de renfort est disposé au centre de la bielle du côté interne du corps creux. On réduit, voire on élimine, le risque de flamber localement, la paroi est plus mince au centre de la bielle qui risquerait sinon de se replier sur elle-même, ou de s'abimer quand on la manipule car la zone centrale est la plus « exposée ».

Avantageusement, un trou est prévu dans le prolongement du corps creux à une interface avec chaque bague. La présence de ces trous aux bords des interfaces sert en particulier à rendre le bielle « dépoudrable », c'est-à-dire permettre l'évacuation de la poudre de la cavité centrale à l'issue d'une fabrication additive par fusion laser sur lit de poudre, appelée aussi LBM (Laser Beam Melting) sans la fragiliser. Cela permet également d'alléger la bielle.

Avantageusement la longueur de la bielle est supérieure ou égale à 440mm. Le profil est particulièrement adapté au grandes longueur de bielles.

L'invention concerne également un procédé de fabrication d'une bielle avec au moins une des caractéristiques précédentes, il est caractérisé en ce que la bielle est réalisée par fabrication additive. Ce procédé de fabrication permet un gain en coût d'environ -20% par rapport au profil conventionnel. La fabrication additive peut être faite par fusion laser sur lit de poudre, ou par dépôt sous énergie concentrée ou DED (Direct Energy Deposition).

Selon une variante de fabrication de la bielle est réalisée en fonderie.

Selon une autre variante de fabrication la bielle réalisée par usinage. Il est possible de combiner le fonderie avec l'usinage.

Avantageusement, le procédé de fabrication comprend les étapes suivantes :
- réalisation d'une première demi-bielle,
- réalisation d'une deuxième demi-bielle,
- assemblage des deux demi-bielles.

L'assemblage des deux demi-bielle peut être réalisée par soudage brasage, vissage ou tout autre moyen d'assemblage.

### BREVE DESCRIPTION DES FIGURES

Les figures sont présentées à titre indicatif et nullement limitatif de l'invention.
[Fig. 1] est une vue en perspective de différentes tailles et forme de bielles ;
[Fig. 2] est une vue en perspective d'une bielle selon l'invention ;
[Fig. 3] est une vue en coupe de la bielle de la figure 2 ;
[Fig. 4] est une coupe d'une demi-bielle selon l'invention ;
[Fig. 5] montre le détail de l'interface du corps creux et d'une bague selon une variante de l'invention ;
[Fig. 6] montre le détail du centre de la bielle ;
[Fig. 7] est une coupe du corps creux ;
[Fig. 8] illustre les résultats de simulation éléments finis du flambement de la bielle avec un profil conventionnel ;
[Fig. 9] illustre les résultats de simulation éléments finis du flambement de la bielle avec un profil creux selon l'invention.

### DESCRIPTION DETAILLEE

Les figures sont présentées à titre indicatif et nullement limitatif de l'invention.

Sauf précision contraire, un même élément apparaissant sur des figures différentes présente une référence unique.

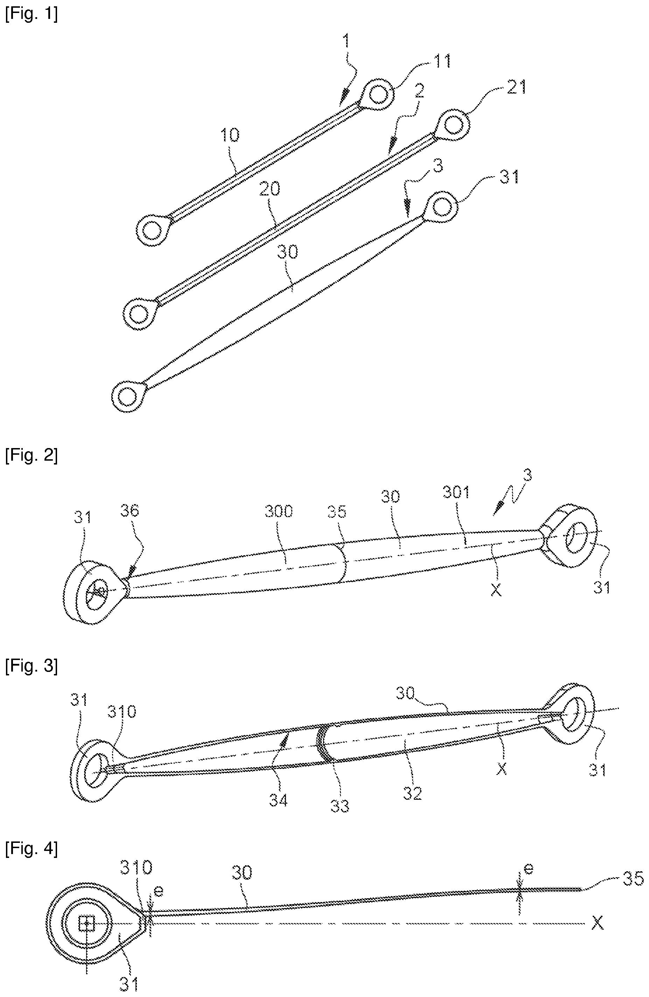

On peut voir à la figure 1 que les bielles 1 et 2 conventionnelles de l'état de la technique sont de plus en plus longues, ce qui entraine une augmentation du diamètre du corps 10, 20 qui relie les deux bagues 11, 21 disposées à une extrémité 36 et donc leur poids. Elles sont en général métalliques réalisée en acier ou en inox. La bielle 3 selon l'invention, à la différence des bielles 1 et 2 de l'état de la technique, n'a pas un diamètre constant. Toutes ces bielles 1, 2 et 3 ont un axe longitudinal X.

La bielle 3 visible plus en détail à la figure 2 a un corps creux 30 en deux parties constituant deux demi-bielles 300 et 301, mais il pourrait aussi être en une seule partie sans sortir du cadre de la présente invention. Le corps 30 se termine par deux bagues 31, chacune étant destinée être reliée à une pièce et servant d'articulation avec celle-ci. Une interface 310 relie chaque extrémité 36 du corps creux 30 à une bague 31.

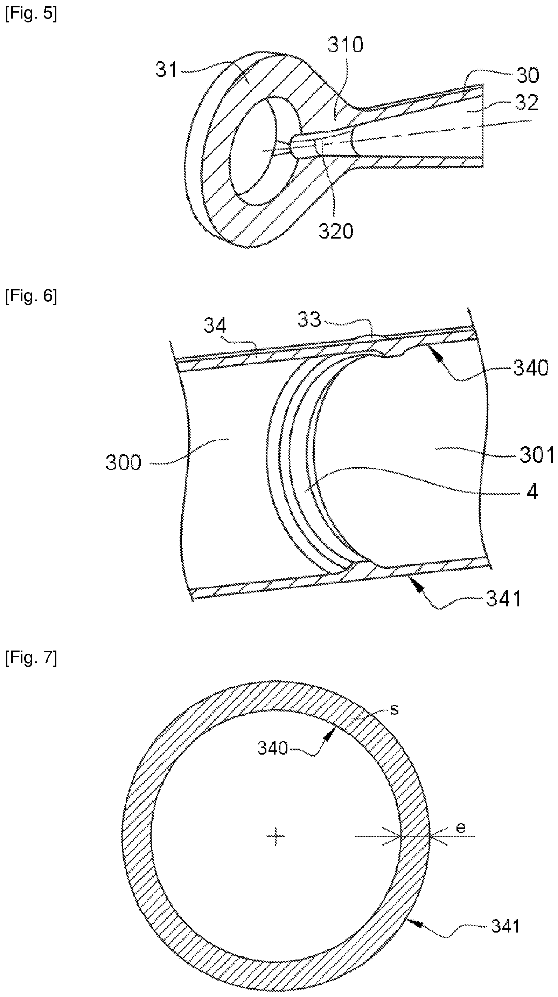

Comme on peut le voir figure 3 le corps creux 30 définit un espace intérieur 32. Les deux demi-bielles 300 et 301 sont reliées entre elles par une liaison 33 réalisée par soudure, par brasage ou par tout autre moyen de liaison. On voit à la figure 6 qu'un anneau de renfort 4 est placé au centre 35 de la bielle 3, c'est-à-dire ici sur la liaison 33 entre les deux demi-bielles 300 et 301. Cet anneau de renfort 4 est disposé à l'intérieur du corps creux 30 sur la partie interne 340 de la paroi 34. Il permet de réduire voire d'éliminer le risque de flambage local de la paroi 34 qui est plus mince au centre 35.

La paroi 34 du corps creux 30 a une épaisseur e. Comme visible à la figure 4, l'épaisseur diminue de l'interface 310 jusqu'au centre 35 de la bielle 3, tandis que la distance entre l'axe X et la paroi 34 augmente. La surface de la section s est ici circulaire, c'est la différence entre la surface définie par la paroi extérieure 341 et la surface définie par la paroi intérieure 340 pour une section donnée, soit la surface entre le périmètre extérieur pₑ de la paroi 34 et le périmètre intérieur pᵢ de la paroi 34. La surface de la section s reste constante tout le long du corps creux 30, ainsi plus la distance entre l'axe X et la paroi 34 augmente plus l'épaisseur e diminue. La section de la paroi 34 pourrait également être ovale ou rectangulaire, voire changer de forme de l'interface 310 jusqu'au centre 35 de la bielle 3, tout en restant toujours fermée. L'axe X est ici rectiligne mais il peut être déformé pour éviter une zone (une zone chaude, par exemple) ou un objet.

L'épaisseur de paroi est ainsi ajustée de manière à égaliser les sections travaillantes tout du long du corps creux 30, l'épaisseur minimale se situe au centre de la bielle.

L'interface 310 entre la bague 31 et le corps creux 30 est ici percée d'un trou 320 disposé dans la prolongement de l'espace intérieur 32. Il doit permettre d'évacuer la poudre restant dans le corps creux 30 lors d'une fabrication additive.

La bielle 3 peut en effet être réalisée par fabrication additive par fusion laser sur lit de poudre. Elle peut aussi être faite par dépôt sous énergie concentrée. Ces procédés de fabrication permettent de réaliser les épaisseurs de parois recherchées. La fabrication de la bielle 3 est alors faite verticalement.

La bielle 3 peut aussi être construite en une seule partie ou en deux demi-bielles assemblées soudées, brasées ou vissées. Cela en particulier si elle fabriquée par fonderie ou usinage.

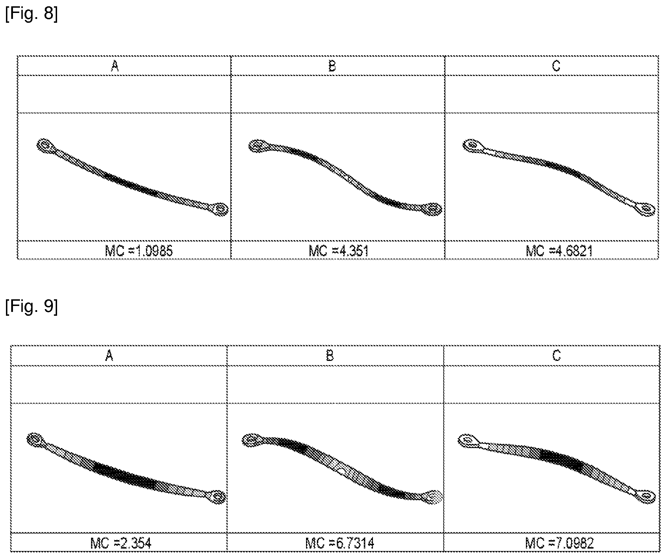

Des simulations par éléments finis ont été faits pour évaluer le flambement de la bielle 3 (figure 9) par rapport à une bielle au profil conventionnel (figure 8) de même longueur. Trois types de flambements ont été définis :
- le flambement A,
- le flambement B,
- le flambement C.

Un multiplicateur de charge (MC dans les tableau 8 et 9) a été calculé pour chaque type de flambement, il correspond au facteur par lequel la charge appliquée à la bielle doit être multiplié pour obtenir le flambement considéré.

Pour la flambement A, on constate que la charge appliquée à la bielle 3 est plus de deux fois plus élevée que celle pour la bielle conventionnelle, 2,354 au lieu de 1,0985.

Pour le flambement B, la différence est de plus de 50% entre les deux bielles, 6,7314 pour 4,351.

Pour le flambement C également la différence est de plus de 50% : 7,0982 pour la bielle 3 et 4, 6821 pour la bielle conventionnelle.

On constate ainsi que loin de diminuer les propriétés de la bielle notamment de son inertie, le profil de la bielle selon l'invention améliore ses propriétés tout en diminuant significativement son poids, jusqu'à 40%. On obtient un gain en résistance tel que le gain masse peut être encore accentué soit en réduisant encore l'épaisseur de paroi ou en passant à un matériau plus léger et moins raide comme par exemple un alliage de titane de type TA6V.

## Revendications

1. Bielle (3) comprenant un corps creux (30) avec une bague (31) à chaque extrémité (36) et un centre (35), une paroi (34) d'épaisseur e, la paroi (34) définissant un périmètre extérieur pₑ et un périmètre intérieur pᵢ, une section de surface s étant comprise entre les périmètres extérieur et intérieur, **caractérisée en ce que** le périmètre extérieur pₑ augmente des extrémités (36) du corps creux (30) vers le centre (35) de la bielle (3), le corps creux (30) gardant une section de surface s constante, l'épaisseur e diminuant de l'extrémité (36) vers le centre (35) de la bielle (3).

2. Bielle (3) selon la revendication 1 **caractérisée en ce que** le corps creux (30) est cylindrique de révolution.

3. Bielle (3) selon la revendication 1 **caractérisée en ce que** le corps creux (30) est ovale ou rectangulaire.

4. Bielle (3) selon une des revendications précédentes **caractérisée en ce qu'**un anneau de renfort (4) est disposé au centre (35) de la bielle (3) du côté interne du corps creux (30).

5. Bielle (3) selon une des revendications précédentes **caractérisée en ce qu'**un trou (320) est prévu dans le prolongement du corps creux (30) à une interface (32) avec chaque bague (31).

6. Bielle (3) selon une des revendications précédentes, **caractérisée en ce que** sa longueur est supérieure ou égale à 440mm.

7. Procédé de fabrication d'une bielle (3) selon une des revendications précédentes, **caractérisé en ce que** la bielle (3) est réalisée par fabrication additive.

8. Procédé de fabrication d'une bielle (3) selon une des revendications 1 à 6, **caractérisé en ce que** la bielle (3) est réalisée en fonderie.

9. Procédé de fabrication d'une bielle (3) selon une des revendications 1 à 6, **caractérisé en ce qu'**elle est réalisée par usinage.

10. Procédé de fabrication d'une bielle (3) selon une des revendications 7 à 9 **caractérisé en ce qu'**elle comprend les étapes suivantes :
- réalisation d'une première demi-bielle (300, 301),
- réalisation d'une deuxième demi-bielle (301, 300),
- assemblage des deux demi-bielles (300, 301).

## Patentansprüche

1. Pleuelstange (3) mit einem Hohlkörper (30) mit einem Ring (31) an jedem Ende (36) und einer Mitte (35), einer Wand (34) mit einer Dicke e, wobei die Wand (34) einen Außenumfang pₑ und einen Innenumfang pᵢ definiert, wobei ein Flächenabschnitt s zwischen dem Außen- und dem Innenumfang liegt, **dadurch gekennzeichnet, dass** der Außenumfang pₑ von den Enden (36) des Hohlkörpers (30) zur Mitte (35) der Pleuelstange (3) zunimmt, wobei der Hohlkörper (30) einen konstanten Flächenabschnitt s beibehält und die Dicke e vom Ende (36) zur Mitte (35) der Pleuelstange (3) abnimmt.

2. Pleuelstange (3) nach Anspruch 1, **dadurch gekennzeichnet, dass** der Hohlkörper (30) rotationszylindrisch ist.

3. Pleuelstange (3) nach Anspruch 1, **dadurch gekennzeichnet, dass** der Hohlkörper (30) oval oder rechteckig ist.

4. Pleuelstange (3) nach einem der vorhergehenden Ansprüche, **dadurch gekennzeichnet, dass** ein Verstärkungsring (4) in der Mitte (35) der Pleuelstange (3) auf der Innenseite des Hohlkörpers (30) angeordnet ist.

5. Pleuelstange (3) nach einem der vorhergehenden Ansprüche, **dadurch gekennzeichnet, dass** in der Verlängerung des Hohlkörpers (30) an einer Schnittstelle (32) mit jedem Ring (31) eine Bohrung (320) vorgesehen ist.

6. Pleuelstange (3) nach einem der vorhergehenden Ansprüche, **dadurch gekennzeichnet, dass** ihre Länge größer oder gleich 440 mm ist.

7. Verfahren zur Herstellung einer Pleuelstange (3) nach einem der vorhergehenden Ansprüche, **dadurch gekennzeichnet, dass** die Pleuelstange (3) durch additive Fertigung hergestellt wird.

8. Verfahren zur Herstellung einer Pleuelstange (3) nach einem der Ansprüche 1 bis 6, **dadurch gekennzeichnet, dass** die Pleuelstange (3) im Gussverfahren hergestellt wird.

9. Verfahren zur Herstellung einer Pleuelstange (3) nach einem der Ansprüche 1 bis 6, **dadurch gekennzeichnet, dass** sie durch Bearbeitung hergestellt wird.

10. Verfahren zur Herstellung einer Pleuelstange (3) nach einem der Ansprüche 7 bis 9, **dadurch gekennzeichnet, dass** es die folgenden Schritte umfasst:
- Herstellung einer ersten Pleuelstangenhälfte (300, 301),
- Herstellung einer zweiten Pleuelstangenhälfte (301, 300),
- Zusammenbau der beiden Pleuelstangenhälften (300, 301).

## Claims

1. A connecting rod (3) comprising a hollow body (30) with a bushing (31) at each end (36) and a centre (35), a wall (34) having thickness e, the wall (34) defining an external perimeter pₑ and an internal perimeter pᵢ, a cross-sectional area s being included between the external and internal perimeters, **characterised in that** the external perimeter pₑ increases from the ends (36) of the hollow body (30) towards the centre (35) of the connecting rod (3), the hollow body (30) keeping a constant cross-sectional area s, the thickness e decreasing from the end (36) towards the centre (35) of the connecting rod (3).

2. The connecting rod (3) according to claim 1 **characterised in that** the hollow body (30) is rotationally cylindrical.

3. The connecting rod (3) according to claim 1 **characterised in that** the hollow body (30) is oval or rectangular.

4. The connecting rod (3) according to one of the preceding claims **characterised in that** a reinforcement ring (4) is disposed in the centre (35) of the connecting rod (3) on the inner side of the hollow body (30).

5. The connecting rod (3) according to one of the preceding claims **characterised in that** a hole (320) is provided as an extension of the hollow body (30) at an interface (32) with each bushing (31).

6. The connecting rod (3) according to one of the preceding claims, **characterised in that** its length is greater than or equal to 440 mm.

7. A method for manufacturing a connecting rod (3) according to one of the preceding claims, **characterised in that** the connecting rod (3) is made by additive manufacturing.

8. The method for manufacturing a connecting rod (3) according to one of claims 1 to 6, **characterised in that** the connecting rod (3) is made in foundry.

9. The method for manufacturing a connecting rod (3) according to one of claims 1 to 6, **characterised in that** it is made by machining.

10. The method for manufacturing a connecting rod (3) according to one of claims 7 to 9 **characterised in that** it comprises the following steps of:
- making a first half-connecting rod (300, 301),
- making a second half-connecting rod (301, 300),
- assembling the two half-connecting rods (300, 301).
